# EUROPÄISCHE PATENTSCHRIFT

(11) **EP 3 661 402 B1**
(45) Veröffentlichungstag und Bekanntmachung des Hinweises auf die Patenterteilung: **21.05.2025**
(21) Anmeldenummer: 18750412.1
(22) Anmeldetag: 02.08.2018
(51) Int. Cl.: A47L 9/19, A47L 9/14, A47L 5/36, A47L 9/28

(54) **VERFAHREN ZUM BETREIBEN EINES SAUGGERÄTS UND SAUGGERÄT**
METHOD FOR OPERATING A SUCTION UNIT, AND SUCTION UNIT
PROCÉDÉ DE FONCTIONNEMENT D'UN APPAREIL D'ASPIRATION ET APPAREIL D'ASPIRATION

(30) Priorität: 03.08.2017 DE 102017117684
(43) Veröffentlichungstag der Anmeldung: 10.06.2020
(73) Patentinhaber: Alfred Kärcher SE & Co. KG, 71364 Winnenden (DE)
(72) Erfinder: LANGEN, Thorsten, 70190 Stuttgart (DE); KAISER, Michael, 71336 Waiblingen (DE); PEFLOF,Gábor, 71364 Winnenden (DE); STEINBACH, Jürgen, 54497 Morbach (DE); STÖCKER, Heiko, 73728 Esslingen (DE)
(74) Vertreter: Hoeger, Stellrecht & Partner Patentanwälte mbB
(86) Internationale Anmeldenummer: PCT/EP2018/071054
(87) Internationale Veröffentlichungsnummer: WO 2019/025566

(56) Entgegenhaltungen:
- EP-A1- 2 636 351
- US-A- 4 733 430
- US-A- 4 733 431
- US-B1- 6 571 422

## Beschreibung

Die Erfindung betrifft ein Verfahren zum Betreiben eines Sauggeräts, welches ein Saugaggregat und eine entfernbare Filtereinrichtung umfasst, wobei das Saugaggregat einen Saugstrom erzeugt, welcher die Filtereinrichtung, wenn sie am Sauggerät angeordnet ist, durchströmt, bei dem nach Inbetriebnahme des Saugaggregats geprüft wird, ob die Filtereinrichtung vorhanden ist, und wenn dann erkannt wird, dass die Filtereinrichtung nicht vorhanden ist, das Saugaggregat abgeschaltet wird, wobei eine Auswerteeinheit Prüfungsdaten verwendet und aus diesen ermittelt, ob ein Abschaltsignal für das Saugaggregat erzeugt werden soll oder nicht.

Die Erfindung betrifft ferner ein Sauggerät, umfassend ein Saugaggregat, und eine entnehmbare Filtereinrichtung, wobei das Saugaggregat einen Saugstrom erzeugt, welcher bei an dem Sauggerät angeordneter Filtereinrichtung die Filtereinrichtung durchströmt, eine Drucksensoreinrichtung, welche zwischen der Filtereinrichtung und dem Saugaggregat angeordnet ist und Druckmesswerte am Saugstrom der Filtereinrichtung nachgeordnet und dem Saugaggregat vorgeordnet bereitstellt, und eine Auswerteeinheit, welche nach Inbetriebnahme des Saugaggregats auf Grundlage der Messdaten der Drucksensoreinrichtung ermittelt, ob die Filtereinrichtung eingesetzt ist oder nicht, und bei Detektion einer fehlenden Filtereinrichtung ein Abschaltsignal für das Saugaggregat erzeugt.

Die US 4,733,430 offenbart einen Staubsauger mit einem Staubbeutelsensor.

Die US 4,733,431 offenbart ebenfalls einen Staubsauger mit einem Staubbeutelsensor.

Die EP 2 636 351 A1 offenbart einen Robotersauger mit einer Detektionseinheit für ein Filter.

Aus der EP 2 598 008 B1 ist ein Staubsauger mit einem Aufnahmeraum für einen Hauptfilter mit einem Drucksensorsystem zum Erfassen einer Größe, welche einen Unterdruck in einem in Saugstromrichtung nach dem Aufnahmeraum liegenden ersten Bereich charakterisiert, mit einer Detektionseinheit, welche in Abhängigkeit von der erfassten Größe detektiert, ob ein Hauptfilter eingesetzt ist, und mit einer Steuereinheit, welche eine Inbetriebnahme des Staubsaugers verhindert und/oder eine Wärmeinformation an eine Bedienperson des Staubsaugers ausgibt, falls detektiert wird, dass kein Hauptfilter eingesetzt ist, bekannt. Das Drucksensorsystem umfasst mindestens einen Druckschalter, welcher ein Ausgangssignal an die Detektionseinheit überträgt, wenn der Unterdruck in dem ersten Bereich über einem vorgebbaren Unterdruck-Schwellenwert liegt, und die Detektionseinheit detektiert, dass kein Hauptfilter eingesetzt ist, wenn kein Ausgangssignal von dem Druckschalter empfangen wird.

Die US 2007/0283521 A1 offenbart eine programmierbare Steuereinheit für ein Staubsaugersystem.

Die US 2007/0163075 A1 offenbart einen Staubsauger.

Die JP 03168117 A offenbart einen Staubsauger mit einer automatischen Stoppfunktion.

Die DE 10 2011 052 020 A1 offenbart einen Staubsauger mit einem Mittel zur Erfassung eines Maßes für einen im Betrieb erzeugten Volumenstrom und/oder mit einem Mittel zur Erfassung eines Maßes für einen im Betrieb erzeugten Unterdruck, wobei eine Antriebsaggregatssteuerung Mittel zum Vergleich des erfassten Volumenstroms und einer vorgegebenen oder vorgebbaren Volumenstromobergrenze und/oder Mittel zum Vergleich des erfassten Unterdrucks und einer vorgegebenen oder vorgebbaren Unterdruckgrenze umfasst und die Antriebsaggregatssteuerung Mittel zum Reduzieren der elektrischen Leistungsaufnahme in Abhängigkeit vom Ergebnis des Vergleichs umfasst oder ansteuert.

Der Erfindung liegt die Aufgabe zugrunde, ein Verfahren der eingangs genannten Art bereitzustellen, mit dem sich das Sauggerät auf sichere Weise betreiben lässt.

Diese Aufgabe wird bei dem eingangs genannten Verfahren erfindungsgemäß dadurch gelöst, dass die Auswerteeinheit einen Algorithmus oder eine Tabelle verwendet, um aus den Prüfungsdaten eine Entscheidung bezüglich Abschalten des Saugaggregats zu treffen, und dass die Tabelle mindestens einen Schwellenwert enthält oder der Algorithmus mindestens einen Schwellenwert bestimmt, wobei der mindestens eine Schwellenwert ein Schwellenwert für eine Abschaltung des Saugaggregats ist.

Eine an dem Sauggerät eingesetzte Filtereinrichtung verhindert, dass eingesaugter Staub in die Umgebung ausgeblasen wird. Grundsätzlich kann es zu einem Zusetzen der Filtereinrichtung durch Staubpartikel kommen. Es hat schon Fälle gegeben, dass in einem solchen Fall Bediener die Filtereinrichtung vom Sauggerät entnehmen und dann das Sauggerät weiter betreiben ohne Filtereinrichtung.

Dies führt dazu, dass Staubpartikel in die Umgebung geblasen werden. Dies ist insbesondere kritisch bei Arbeiten mit gesundheitsgefährlichen Stäuben.

Ohne eingesetzte Filtereinrichtung können Staubpartikel zu dem Saugaggregat gelangen und sich dort ablagern.

Ferner kann, insbesondere wenn die Filtereinrichtung zusätzlich eine Dichtungsfunktion aufweist, der Saugbetrieb deutlich eingeschränkt werden, da aufgrund der fehlenden Abdichtung durch die Filtereinrichtung nicht mehr die gesamte Saugleistung (aufgrund des Ziehens von Falschluft) zur Verfügung steht.

Bei der erfindungsgemäßen Lösung wird nach Inbetriebnahme des Sauggeräts geprüft, ob die Filtereinrichtung überhaupt vorhanden ist und dann, wenn das Überprüfungsergebnis ergibt, dass diese nicht vorhanden ist, wird das Saugaggregat abgeschaltet. Dadurch wird insbesondere das Ausblasen von Staubpartikeln in die Raumluft verhindert.

Durch die Prüfung nach Inbetriebnahme des Saugaggregats lässt sich die entsprechende Prüfvorrichtung auf konstruktiv einfache Weise realisieren. Die Anzahl der dazu benötigten Bauteile lässt sich gering halten. Es lassen sich insbesondere bereits sowieso vorhandene Bauteile für die Prüfung verwenden. Die Filtereinrichtung muss nicht modifiziert werden.

Es ist eine Auswerteeinheit vorgesehen ist, welche Prüfungsdaten verwendet und aus diesen ermittelt, ob ein Abschaltsignal für das Saugaggregat erzeugt werden soll oder nicht. Es lässt sich dadurch auf einfache Weise eine Detektionsprüfung für die Filtereinrichtung durchführen. Die Prüfungsdaten umfassen insbesondere Druckmesswerte an einer Absaugleitung zwischen der Filtereinrichtung und dem Saugaggregat. Ferner kann beispielsweise auch eine elektrische Spannung einer Energiequelle für das Saugaggregat berücksichtigt werden. Es ist beispielsweise auch möglich, dass weiterhin eine elektrische Leistungsaufnahme für das Saugaggregat berücksichtigt wird.

Die Auswerteeinheit verwendet einen Algorithmus oder eine Tabelle, um aus den Prüfungsdaten eine Entscheidung bezüglich Abschalten des Saugaggregats zu treffen. Dadurch lässt sich das entsprechende Prüfungsverfahren auf einfache Weise realisieren. Die Anzahl der Hardware-Komponenten (wie Schalter und Leitungen) lässt sich gering halten.

Die Tabelle enthält mindestens einen Schwellenwert enthält oder der Algorithmus bestimmt mindestens einen Schwellenwert, wobei der mindestens eine Schwellenwert einen Schwellenwert für eine Abschaltung des Saugaggregats ist, und insbesondere ein Druckwert ist, wobei ein Abschalten des Saugaggregats vorzugsweise bei einem zu großen absoluten Druckwert bezogen auf den Schwellenwert erfolgt. Ein zu großer absoluter Druckwert bzw. eine zu kleine Druckdifferenz bezüglich dem Umgebungsdruck ist ein Indiz für eine fehlende Filtereinrichtung.

Günstig ist es, wenn ein bestimmtes Zeitintervall nach der Inbetriebnahme des Saugaggregats abgewartet wird, bevor Prüfungsergebnisse zum Abschalten oder Weiterbetrieb des Saugaggregats verwendet werden. Das bestimmte Zeitintervall ist so bestimmt, dass sich stabile Werte, anhand derer geprüft wird, einstellen können und insbesondere stabile Druckwerte sich einstellen können. Das Zeitintervall wird dabei mindestens so lange gewählt, dass sich eben diese stabilen Werte einstellen können, und wird bevorzugterweise so kurz gewählt, dass bezogen auf eine Detektion einer fehlenden Filtereinrichtung die Inbetriebnahme-Dauer des Sauggeräts minimiert ist.

Es hat sich gezeigt, dass das bestimmte Zeitintervall mindestens 2,5 s und vorzugsweise mindestens 3 s und insbesondere mindestens 3,5 s betragen sollte. Beispielsweise beträgt dieses bestimmte Zeitintervall 4 s oder 5 s. Das bestimmte Zeitintervall ist auch mindestens näherungsweise das Zeitintervall, welches die höchste Betriebsdauer des Saugaggregats ist, wenn eine fehlende Filtereinrichtung detektiert wird.

Konstruktiv günstig ist es, wenn die Prüfung bezüglich Vorhandensein der Filtereinrichtung an dem Saugstrom durchgeführt wird. Dadurch lässt sich unter minimiertem konstruktivem Aufwand eine sichere Detektion bezüglich fehlender oder vorhandener Filtereinrichtung durchführen.

Insbesondere sind die Grundlage der Prüfung gemessene Druckwerte an dem Saugstrom zwischen der Filtereinrichtung und dem Saugaggregat. Diese gemessenen Druckwerte lassen sich dazu verwenden, um das Vorhandensein bzw. das Fehlen der Filtereinrichtung detektieren zu können.

Es ist dabei günstig, wenn die Druckmesswerte an einer oder mehreren Stellen bezogen auf den Saugstrom oberhalb eines Halters für die Filtereinrichtung ermittelt werden, wobei diese Stellen oberhalb der Filtereinrichtung liegen, wenn die Filtereinrichtung an dem Halter eingesetzt ist. Insbesondere erfolgt die entsprechende Messung an einer Absaugleitung, welche strömungswirksam bezogen auf den Saugstrom die Filtereinrichtung mit dem Saugaggregat verbindet. Bei einer Ausführungsform ist es vorgesehen, dass die Stelle oder Stellen, an der Druckmesswerte ermittelt werden, außerhalb eines Beaufschlagungsbereichs einer Abreinigungseinrichtung für die Filtereinrichtung liegen. Über die Abreinigungseinrichtung wie beispielsweise eine Fremdluftventileinrichtung lässt sich ein zugesetztes Filter abreinigen, um eine verbesserte Durchströmbarkeit zu erreichen. Durch die entsprechende Position der Drucksensoreinrichtung kann verhindert werden, dass eine Abreinigungsbeaufschlagung über mechanische Kräfte und/oder Druckpulse für die Filtereinrichtung die Drucksensoreinrichtung mindestens direkt trifft.

Es hat sich als günstig erwiesen, wenn zur Prüfung bezüglich Vorhandensein oder Nicht-Vorhandensein des Filters weiterhin eine elektrische Spannung an einer Energiequelle für das Saugaggregat verwendet wird. Wenn beispielsweise die elektrische Energiequelle für das Saugaggregat ein öffentliches elektrisches Netz ist, dann kann es zu Spannungsschwankungen kommen. Es hat sich gezeigt, dass unter Berücksichtigung dieser Spannungsschwankungen eine verbesserte Detektion bezüglich Vorhandensein oder Nicht-Vorhandensein der Filtereinrichtung ermöglicht ist.

Die Auswerteeinheit ist signalwirksam mit einer Steuerung für das Saugaggregat verbunden oder Teil dieser Steuerung. Es ergibt sich dadurch ein einfacher konstruktiver Aufbau. Insbesondere wird die Auswerteeinheit mindestens größtenteils softwaremäßig innerhalb der Steuerung realisiert.

Günstigerweise verwendet die Auswerteeinheit einen Algorithmus oder eine Tabelle, um aus den Prüfungsdaten eine Entscheidung bezüglich Abschalten des Saugaggregats zu treffen. Dadurch lässt sich das entsprechende Prüfungsverfahren auf einfache Weise realisieren.

Es ist dann günstig, wenn die Tabelle mindestens einen Schwellenwert enthält oder der Algorithmus mindestens einen Schwellenwert bestimmt, wobei der mindestens eine Schwellenwert einen Schwellenwert für eine Abschaltung des Saugaggregats ist, und insbesondere ein Druckwert ist, wobei ein Abschalten des Saugaggregats vorzugsweise bei einem zu großen absoluten Druckwert bezogen auf den Schwellenwert erfolgt. Ein zu großer absoluter Druckwert bzw. eine zu kleine Druckdifferenz bezüglich dem Umgebungsdruck ist ein Indiz für eine fehlende Filtereinrichtung.

Es hat sich als günstig erwiesen, wenn die Tabelle Schwellenwerte bei unterschiedlichen elektrischen Spannungen einer (elektrischen) Energiequelle für das Saugaggregat umfasst oder der Algorithmus Schwellenwerte bei solchen unterschiedlichen elektrischen Spannungen bestimmt. Es hat sich gezeigt, dass so beispielsweise auch Spannungsschwankungen in einem Stromversorgungsnetz erfasst werden können, sodass wiederum solche Spannungsschwankungen die Filterdetektion nicht beeinflussen.

Es hat sich weiterhin als günstig erwiesen, wenn die Tabelle Schwellenwerte für unterschiedliche Leistungsaufnahmen des Saugaggregats umfasst oder der Algorithmus solche Schwellenwerte für unterschiedliche Leistungsaufnahmen des Saugaggregats umfasst oder der Algorithmus solche Schwellenwert für unterschiedliche Leistungen des Saugaggregats bestimmt und insbesondere eine Einteilung bezogen auf eine minimale Leistungsaufnahme und maximale Leistungsaufnahme des Saugaggregats erfolgt. Dadurch ergibt sich ein breiter Anwendungsbereich für eine Filterdetektion. Insbesondere lässt sich dann eine solche Prüfung weitgehend unabhängig von angeschlossenem Zubehör (und insbesondere Saugschläuchen) erreichen. Es hat sich beispielsweise erwiesen, dass sich dann Schwellenwerte vorgeben lassen, welche weitgehend unabhängig davon sind, welcher Durchmesser ein angeschlossener Saugschlauch aufweist.

Schwellenwerte werden bei einer Ausführungsform aus Messungen ermittelt, bei denen Saugschläuche unterschiedlichen Durchmessers an das Sauggerät angeschlossen werden und Druckmesswerte mit eingesetzter Filtereinrichtung und ohne eingesetzte Filtereinrichtung gemessen werden. Aus solchen Messwerten wird dann ein Schwellenwert mit "kleinstem gemeinsamen Nenner" ermittelt.

Es hat sich dabei als günstig erwiesen, wenn bei der Ermittlung der Schwellenwerte unterschiedliche elektrische Spannungen einer Energiequelle für das Saugaggregat verwendet werden, um so den Einfluss von Spannungsschwankungen ermitteln zu können und gegebenenfalls berücksichtigen zu können.

Aus dem gleichen Grund ist es günstig, wenn bei der Ermittlung der Schwellenwerte unterschiedliche Leistungsaufnahmen für das Saugaggregat verwendet werden und insbesondere eine minimale Leistungsaufnahme und eine maximale Leistungsaufnahme verwendet werden. Es ergeben sich so Schwellenwerte, welche zumindest in gewissem Maße abhängig sein können von der Leistungsaufnahme.

Bei einer Ausführungsform weist eine eingesetzte Filtereinrichtung eine Dichtungsfunktion an einem Übergang zu einem Schmutzsammelbehälter auf. Dies wirkt sich auf den Schwellenwert aus. Wenn die Filtereinrichtung fehlt, dann können Fehlströme usw. entstehen. Dies führt dazu, dass im Vergleich mit eingesetzter Filtereinrichtung der Unterdruck im Saugstrom verringert ist bzw. der absolute Druckwert näher am Umgebungsdruck liegt.

Es ist weiterhin möglich, dass die Auswerteeinheit Maßnahmen aus den ermittelten Prüfungsdaten einleitet, wenn das Vorhandensein einer Filtereinrichtung erkannt wird. Wenn das Vorhandensein einer Filtereinrichtung erkannt wird, dann kann das Saugaggregat weiter betrieben werden. Solche Maßnahmen können dann umfassen: Initiierung einer Abreinigung der Filtereinrichtung durch eine Abreinigungseinrichtung und/oder Erzeugung eines Wartungssignals, wenn ein Schwellenwert für einen Volumenstrom unterschritten wird. Wenn beispielsweise dann zeitlich ein Druckverlauf gemessen wird, kann beispielsweise zeitlich ein Zusetzen der Filtereinrichtung mit Staubpartikeln detektiert werden. Es kann dann eine bedarfsgerechte Filterabreinigung beispielsweise bei Erreichen eines Schwellenwerts erfolgen. Weiterhin kann beispielsweise ein Wartungssignal erzeugt werden, welches auf anderes Problem hinweist, wie beispielsweise Verschluss des Saugschlauchs, wenn ein Schwellenwert für einen Volumenstrom unterschritten wird, wobei dies grundsätzlich aus den Druckmesswerten ermittelbar ist.

Die eingangs genannte Aufgabe wird bei dem eingangs genannten Sauggerät erfindungsgemäß dadurch gelöst, dass die Auswerteeinheit eine Speichereinrichtung umfasst, welche Schwellenwerte oder Daten für einen Algorithmus für Schwellenwerte speichert, wobei die Schwellenwerte Schwellenwerte für eine Abschaltung des Saugaggregats sind.

Dieses Sauggerät weist die bereits im Zusammenhang mit dem erfindungsgemäßen Verfahren erläuterten Vorteile auf.

Weitere vorteilhafte Ausgestaltungen des erfindungsgemäßen Sauggeräts wurden bereits im Zusammenhang mit dem erfindungsgemäßen Verfahren erläutert.

Insbesondere umfasst die Auswerteeinheit ein Zeitglied, welches dafür sorgt, dass ein Abschaltsignal erst nach Ablauf eines bestimmten Zeitintervalls nach Inbetriebnahme des Saugaggregats wirksam wird. Das bestimmte Zeitintervall ist insbesondere in der Auswerteeinheit hinterlegt und wurde vorzugsweise werkseitig bestimmt bzw. festlegt.

Die Auswerteeinheit umfasst eine Speichereinrichtung, welche Schwellenwerte oder Daten für einen Algorithmus für Schwellenwerte speichert, wobei die Schwellenwerte insbesondere Druckwerte sind. Dadurch lässt sich auf einfache Weise eine Filterdetektion durchführen. Die Anzahl der Hardware-Komponenten lässt sich gering halten. Es ist insbesondere kein Druckschalter mit entsprechenden Leitungen notwendig. Ein erheblicher Anteil bei der Ermittlung lässt sich softwaremäßig realisieren.

Es ist ferner günstig, wenn die Auswerteeinheit eine Ermittlungseinrichtung für eine elektrische Spannung an einer elektrischen Energiequelle für das Saugaggregat umfasst. Dadurch lassen sich beispielsweise Spannungsschwankungen in einem öffentlichen Versorgungsnetz berücksichtigen und die Filterdetektion lässt sich auf sichere Weise trotz solcher möglichen Schwankungen durchführen.

Ferner kann es vorgesehen sein, dass die Auswerteinheit eine Bestimmungseinrichtung für eine Leistungsaufnahme des Saugaggregats umfasst und insbesondere die Leistungsaufnahme in eine maximale Leistungsaufnahme oder minimale Leistungsaufnahme einteilt. Dadurch ergibt sich ein sicheres Detektionsergebnis.

Insbesondere ist die Auswerteeinheit signalwirksam mit einer Steuerung des Sauggeräts (welche auch eine Steuerung für das Saugaggregat ist) verbunden oder ist Teil dieser Steuerung. Dadurch lässt sich die Prüfung bezüglich Vorhandensein der Filtereinrichtung in die Steuerung des Sauggeräts integrieren.

Das erfindungsgemäße Sauggerät lässt sich zur Durchführung des erfindungsgemäßen Verfahrens verwenden bzw. das erfindungsgemäße Verfahren lässt sich an dem erfindungsgemäßen Sauggerät durchführen.

Die nachfolgende Beschreibung bevorzugter Ausführungsformen der Erfindung dient im Zusammenhang mit den Zeichnungen der näheren Erläuterung der Erfindung. Es zeigen:
- Figur 1: eine schematische Darstellung eines Ausführungsbeispiels eines erfindungsgemäßen Sauggeräts; und
- Figur 2: eine schematische Darstellung eines Ausführungsbeispiels einer Auswerteeinheit für das Sauggerät gemäß Figur 1 (in Blockschaltbilddarstellung).

Ein Ausführungsbeispiel eines erfindungsgemäßen Sauggeräts 10 ist ein Staubsauger als stand-alone-Gerät. Dieses Sauggerät 10 weist einen Schmutzsammelbehälter 12 auf. Es ist vorgesehen, dass der Schmutzsammelbehälter 12 und damit das Sauggerät 10 als Ganzes fahrbar auf einer Unterlage über eine Lenkrolle 14 und eine Radeinrichtung 16 aufstellbar ist.

Auf den Schmutzsammelbehälter 12 ist ein lösbarer Saugkopf 18 aufgesetzt.

Beispielsweise ist an dem Schmutzsammelbehälter 12 ein Saugeinlass 20 angeordnet. Bei einer alternativen Ausführungsform ist der Saugeinlass 20 an dem Saugkopf 18 angeordnet. An diesen Saugeinlass 20 ist ein Saugschlauch 22 anschließbar; in einem Saugbetrieb des Sauggeräts 10 wird über einen angeschlossenen Saugschlauch 22 (an dem gegebenenfalls noch eine Düse sitzt) Sauggut eingesaugt.

Der Saugkopf 18, wenn er an dem Schmutzsammelbehälter 12 sitzt, dichtet diesen oberseitig ab. Er weist einen Saugauslass 24 auf, an dem eine Filtereinrichtung 26 mit (mindestens) einem Filter an einem Filterhalter 27 positioniert ist. Der Filterhalter 27 ist beispielsweise umgreifend oder als Grundplatte ausgebildet.

An die Filtereinrichtung 26 schließt sich (mindestens) eine Absaugleitung 28 an. Die Absaugleitung 28 führt zu einem Saugaggregat 30. Das Saugaggregat 30 umfasst eine Gebläseeinrichtung 32 mit (mindestens) einem Gebläserad und einem Antriebsmotor 34 zum motorischen Antrieb des Gebläserads der Gebläseeinrichtung 32. Der Antriebsmotor 34 ist insbesondere ein Elektromotor, wie beispielsweise ein Universalmotor.

Die Absaugleitung 28 und das Saugaggregat 30 sind in dem Saugkopf 18 angeordnet.

Bei der beschriebenen Ausführungsform ist die Filtereinrichtung 26 in dem Saugkopf 18 angeordnet.

Es ist grundsätzlich auch möglich, dass die Filtereinrichtung 26 an dem Schmutzsammelbehälter 12 angeordnet ist.

Das Saugaggregat 30 erzeugt über die Gebläseeinrichtung 32 einen Saugstrom, welcher über die Absaugleitung 28 auf den Schmutzsammelbehälter 12 und auf den Saugeinlass 20 wirkt. Die Filtereinrichtung 26 wird im Saugstrombetrieb des Sauggeräts 10 mit dem Saugstrom durchströmt. Unter der Wirkung des Saugstroms tritt mit Schmutzpartikeln beladene Luft über den Saugeinlass 20 in den Schmutzsammelbehälter 12 ein und die Partikel können in dem Schmutzsammelbehälter 12 gesammelt werden. Die Filtereinrichtung 26 filtert Schmutzpartikel aus. Sie weist dementsprechend eine Schmutzseite 36 auf, welche dem Schmutzsammelbehälter 12 zugewandt ist, und weist eine Reinseite 38 auf, an welche die Absaugleitung 28 angeschlossen ist.

(Gereinigte) Saugluft kann vom Saugaggregat 30 über Abluftöffnungen an die Umgebung abgegeben werden.

Bei einem Ausführungsbeispiel ist der Filtereinrichtung 26 eine Abreinigungseinrichtung 40 zugeordnet. Die Abreinigungseinrichtung 40 ist in dem Saugkopf 18 so angeordnet, dass durch sie die Filtereinrichtung 26 für einen Abreinigungsvorgang beaufschlagbar ist. An dem Filter der Filtereinrichtung 26 lagern sich Feststoffpartikel ab. Über die Abreinigungseinrichtung 40 lassen sich solche Feststoffpartikel lösen, um die Filterwirkung der Filtereinrichtung 26 zu verbessern.

Bei einem Ausführungsbeispiel ist die Abreinigungseinrichtung 40 eine Fremdluftventileinrichtung, welche die Filtereinrichtung 26 mit Luftstößen beaufschlagt, um einen Abreinigungseffekt zu erzielen.

Die Filtereinrichtung 26 ist grundsätzlich von dem Filterhalter 72 und damit von dem Sauggerät 10 entnehmbar, um beispielsweise einen Filteraustausch zu ermöglichen.

Wenn die Filtereinrichtung 26 an dem Sauggerät 10 eingesetzt ist, das heißt bei dem beschriebenen Ausführungsbeispiel an dem Saugkopf 18 eingesetzt ist, und der Saugkopf 18 an dem Schmutzsammelbehälter 12 positioniert ist und insbesondere mit diesem verriegelt ist, dann hat die Filtereinrichtung 26 eine Dichtfunktion; der Saugstrom kann nur durch Filtermaterial des Filters der Filtereinrichtung 26 von dem Schmutzsammelbehälter 12 in die Absaugleitung 28 strömen.

An der Absaugleitung 28 ist zwischen der Filtereinrichtung 26 und der Gebläseeinrichtung 32 (mindestens) ein Drucksensor 42 einer Drucksensoreinrichtung angeordnet. Durch diesen Drucksensor 42 lässt sich der Druck im Saugstrom nachfolgend der Filtereinrichtung 26 messen. Es lässt sich der herrschende Druck in der Absaugleitung 28 ermitteln.

Bei einem Ausführungsbeispiel ist der Drucksensor 42 so angeordnet, dass er nicht in einem Beaufschlagungsbereich der Abreinigungseinrichtung 40 auf die Filtereinrichtung 26 liegt. Wenn beispielsweise die Abreinigungseinrichtung 40 eine Fremdluftventileinrichtung ist, dann ist vorzugsweise der Drucksensor 42 so angeordnet, dass er zumindest nicht direkt von Luftstößen der Abreinigungseinrichtung 40 beaufschlagt wird.

Das Sauggerät 10 weist eine Steuerung 44 auf, welche den Betrieb des Sauggeräts 10 steuert. Diese Steuerung 44 umfasst eine oder mehrere Platinen, auf denen elektronische Elemente angeordnet sind. Die Steuerung 44 ist insbesondere in dem Saugkopf 18 positioniert.

Grundsätzlich kann das Sauggerät 10 ohne Filtereinrichtung 26 betrieben werden. Dies führt allerdings dazu, dass eingesaugte Feststoffpartikel wieder in die Umgebung geblasen werden. Weiterhin können Feststoffpartikel in relativ großen Mengen in die Absaugleitung 28 und zu der Gebläseeinrichtung 32 gelangen und Beschädigungen verursachen. Ein Betrieb des Sauggeräts 10 ohne die Filtereinrichtung 26 ist besonders kritisch bei Arbeiten mit gesundheitsgefährlichen Stäuben.

Erfindungsgemäß ist es vorgesehen, dass an dem Sauggerät 10 automatisch erkannt wird, ob eine Filtereinrichtung 26 eingesetzt ist oder nicht, und bei Erkennen einer fehlenden Filtereinrichtung 26 ein (dauerhafter) Betrieb des Sauggeräts 10 verhindert wird.

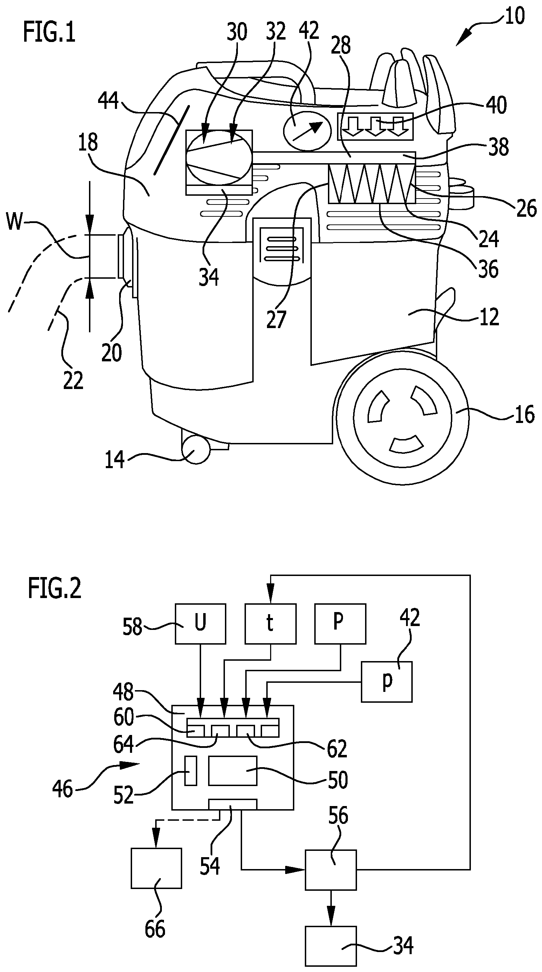

Bei einem Ausführungsbeispiel umfasst die Steuerung 44 eine Auswerteeinheit 46 (Figur 2). Die Auswerteeinheit 46 ist dabei insbesondere in die Steuerung 44 integriert.

Es ist grundsätzlich auch möglich, dass die Auswerteeinheit 46 von der Steuerung 44 beabstandet ist und in signalwirksamer Kooperation mit der Steuerung 44 steht.

Der Auswerteeinheit 46 werden verschiedene Daten bereitgestellt. Die Auswerteeinheit 46 umfasst dazu eine entsprechende (Eingabe-)Schnittstelle 48. Eine Prüfungseinrichtung 50 der Auswerteeinheit 46 prüft aufgrund der vorhandenen Daten auf Vorhandensein bzw. Nicht-Vorhandensein der Filtereinrichtung 26.

Die Prüfungseinrichtung 50 zieht dazu eine oder mehrere Algorithmen heran oder greift auf eine Tabelle zu, welche in einer Speichereinrichtung 52 gespeichert ist.

Die Auswerteeinheit 46 umfasst ferner eine (Ausgabe-)Schnittstelle 54. Diese Schnittstellt 54 steuert insbesondere das Saugaggregat 30 und dabei den Antriebsmotor 34 direkt oder indirekt an. Beispielsweise erzeugt die Schnittstelle 54 ein entsprechendes Abschaltsignal, welches an einen Schalter 56 (insbesondere der Steuerung 44) übermittelt wird, um bei Detektion einer fehlenden Filtereinrichtung 26 das Saugaggregat 30 abschalten zu können.

Der Drucksensor 42 der Drucksensoreinrichtung stellt seine Messwerte der Auswerteeinheit 46 bereit. Auf Grundlage der gemessenen Druckwerte prüft dann die Auswerteeinheit 46 auf Vorhandensein bzw. Nicht-Vorhandensein der Filtereinrichtung 46.

Der Antriebsmotor 34 wird über eine elektrische Energiequelle 58 mit elektrischer Energie versorgt. Grundsätzlich können an der elektrischen Energiequelle 58 Spannungsschwankungen auftreten.

Für ein Sauggerät 10 mit Netzbetrieb ist die primäre elektrische Energiequelle 58 ein beispielsweise öffentliches Stromnetz. In einem solchen öffentlichen Stromnetz können Spannungsschwankungen auftreten. Es hat sich gezeigt, dass solche Spannungsschwankungen grundsätzlich einen Einfluss haben können.

Bei einem Ausführungsbeispiel umfasst die Auswerteeinheit 56 eine Ermittlungseinrichtung 60 für diese elektrische Spannung, um eben gegebenenfalls Abweichungen von einer Nennspannung (wie beispielsweise 230 V) berücksichtigen zu können.

Die Ermittlungseinrichtung 60 ermittelt die tatsächlich wirkende Spannung insbesondere für den Antriebsmotor 34.

Es ist ebenfalls grundsätzlich möglich, dass eine elektrische Leistungsaufnahme des Saugaggregats 30 die Prüfung beeinflusst. Bei einer Ausführungsform umfasst die Auswerteeinheit 46 eine Bestimmungseinrichtung 62 für eine entsprechende Leistungsaufnahme P. Es ist dabei insbesondere vorgesehen, dass eine Einteilung der elektrischen Leistungsaufnahme in bestimmte Bereiche erfolgt und insbesondere in eine minimale Leistungsaufnahme, bei der noch ein Saugbetrieb möglich ist, und eine maximale Leistungsaufnahme.

Die maximale Leistungsaufnahme ist die maximale Leistung, die die Gebläseeinrichtung 32 bei offenem Referenz-Saugschlauch einer bestimmten Länge und eines bestimmten Durchmessers ziehen kann.

Zur Prüfung, ob die Filtereinrichtung 26 vorhanden ist oder nicht, muss das Sauggerät 10 betrieben werden, das heißt das Saugaggregat 30 muss angeschaltet sein. Bei einem Ausführungsbeispiel umfasst die Auswerteeinheit 46 ein Zeitglied 64. Dieses Zeitglied 64 misst die Zeit, die seit der Inbetriebnahme des Saugaggregats 30 vergangen ist. Es hat sich gezeigt, dass ein bestimmtes Zeitintervall abgewartet werden muss, bevor Prüfungsergebnisse ermittelt werden können bzw. Prüfungsergebnisse sinnvoll verwendet werden können, um gegebenenfalls das Saugaggregat 30 wieder abzuschalten.

Insbesondere wird dieses bestimmte Zeitintervall vorgegeben. Es beträgt beispielsweise mindestens 2,5 s und vorzugsweise mindestens 3 s und besonders bevorzugt mindestens 3,5 s. Bei einem konkreten Ausführungsbeispiel beträgt dieses bestimmte Zeitintervall 4 s oder 5 s.

Das erfindungsgemäße Verfahren zum Betreiben des Sauggeräts 10 und dabei zum Erkennen, ob die Filtereinrichtung 26 vorhanden ist oder nicht, funktioniert wie folgt:
Wenn das Sauggerät 10 in Betrieb genommen wird, dann wird das Saugaggregat 30 in Betrieb genommen. Es wird ein Saugstrom erzeugt, welcher über die Absaugleitung 28 den Schmutzsammelbehälter 12, den Saugeinlass 20 und einen daran angeschlossenen Saugschlauch 22 beaufschlägt.

Es wird die Prüfung durchgeführt, wobei das bestimmte Zeitintervall abgewartet wird, bevor die Prüfung durchgeführt wird oder Prüfungsergebnisse verwendet werden, um insbesondere das Saugaggregat 30 abzuschalten (falls eine fehlende Filtereinrichtung 26 detektiert wird). Das Zeitglied 64 prüft dabei, ob dieses bestimmte Zeitintervall bereits abgelaufen ist oder nicht.

Zur Prüfung werden die Messwerte des Drucksensors 42 herangezogen.

Es wird dabei geprüft, ob der Druck eine bestimmte Schwelle unterschreitet oder nicht. Dieser Schwellenwert für den Druck kann prinzipiell über einen oder mehrere Algorithmen berechnet werden, oder er kann in einer Tabelle insbesondere in der Speichereinrichtung 52 hinterlegt sein.

Wenn die Filtereinrichtung 26 eingesetzt ist, dann stellt sich bei einem bestimmten Schlauchdurchmesser W des Saugschlauchs 22, einer vorgegebenen Spannung U und einer bestimmten Leistungsaufnahme P ein Druck in der Absaugleitung 28 ein, welcher näherungsweise konstant ist und über den Drucksensor 42 messbar ist. Dieser Druck ist bezogen auf den Umgebungsdruck ein Unterdruck.

Wenn die Filtereinrichtung 26 nicht vorhanden ist, dann stellt sich ebenfalls ein Druckwert ein, welcher unterschiedlich ist von dem Druckwert bei vorhandener Filtereinrichtung 26. Üblicherweise ist der absolute Druckwert bei nicht vorhandener Filtereinrichtung 26 größer als bei vorhandener Filtereinrichtung 26, da bei fehlender Filtereinrichtung 26 die Dichtwirkung der Filtereinrichtung 26 an dem Saugkopf 18 fehlt und dadurch Bypass-Kanäle für Falschluft geöffnet sind.

Bezogen auf absolute Druckwerte lässt sich dann durch Überschreiten eines vorgegebenen Schwellenwerts als absoluter Druckwert detektieren, dass keine Filtereinrichtung 26 vorhanden ist. Wenn ein Unterdruck als Differenzdruck zum Umgebungsdruck ermittelt wird, welcher zu klein ist (unter einem Schwellenwert liegt), dann ist dies ein Detektionsergebnis für eine fehlende Filtereinrichtung 26, welches zu einem Abschalten des Saugaggregats 30 führt.

Insbesondere werden dann Schwellenwerte in der Speichereinrichtung 52 tabellarisch gespeichert in ihrer Abhängigkeit von U und P.

Die Schwellenwerte werden zuvor für ein spezifisches Sauggerät 10 ermittelt und in der Speichereinrichtung 52 tabellarisch gespeichert bzw. es wird ein entsprechender Algorithmus dafür vorgesehen.

Bei einem Ausführungsbeispiel wurden für ein spezifisches Sauggerät 10 bei einer Raumtemperatur von 20°C zur Ermittlung von Schwellenwerten die Druckwerte an dem Drucksensor 42 für unterschiedliche Spannungen (230 V, 207 V und 254 V) bei unterschiedlichen Schlauchdurchmessern W gemessen. Es wurde dabei zum einen die Filtereinrichtung 26 eingesetzt und zum anderen weggelassen.

Es wurde dabei ferner das Saugaggregat 30 wie oben beschrieben mit minimaler Leistungsaufnahme P und mit maximaler Leistungsaufnahme P betrieben. Es ergaben sich folgende Messwerte:

**Tabelle 1:**

| U = 230V: | | | | |
|---|---|---|---|---|
| Schlauchdurchmesser W [mm] | Unterdruck [mbar] Max Leistung P/ Mit Filtereinrichtung | Unterdruck [mbar] Max Leistung P/ ohne Filtereinrichtung | Unterdruck [mbar] min Leistung P/ Mit Filtereinrichtung | Unterdruck [mbar] min Leistung P/ ohne Filtereinrichtung |
| 50 | 41 | 10 | 20 | 6 |
| 40 | 58 | 12 | 28 | 7 |
| 35 | 67 | 13 | 34 | 7,5 |
| 32 | 75 | 13,5 | 39 | 7,9 |
| 27 | 104 | 16 | 58 | 9,3 |
| 21 | 160 | 20,6 | 89 | 11,4 |

**Tabelle 2:**

| U=207V: | | | | |
|---|---|---|---|---|
| Schlauchdurchmesser W [mm] | Unterdruck [mbar] Max Leistung P/ Mit Filtereinrichtung | Unterdruck [mbar] Max Leistung P/ ohne Filtereinrichtung | Unterdruck [mbar] min Leistung P/ Mit Filtereinrichtung | Unterdruck [mbar] min Leistung P/ ohne Filtereinrichtung |
| 50 | 37 | 8,4 | 19,4 | 4,8 |
| 40 | 52 | 9,9 | 27 | 8 |
| 35 | 64 | 11,3 | 34 | 6,2 |
| 32 | 67 | 11,8 | 35 | 6,5 |
| 27 | 92 | 14,4 | 51 | 7,7 |
| 21 | 137 | 18,5 | 76 | 9,6 |

**Tabelle 3:**

| U=254V: | | | | |
|---|---|---|---|---|
| Schlauchdurchmesser W [mm] | Unterdruck [mbar] Max Leistung P/ Mit Filtereinrichtung | Unterdruck [mbar] Max Leistung P/ ohne Filtereinrichtung | Unterdruck [mbar] min Leistung P/ Mit Filtereinrichtung | Unterdruck [mbar] min Leistung P/ ohne Filtereinrichtung |
| 50 | 49 | 11,2 | 26,5 | 6,3 |
| 40 | 67 | 13,7 | 37 | 7,5 |
| 35 | 81 | 15,3 | 46 | 8,4 |
| 32 | 87 | 15,5 | 49 | 8,5 |
| 27 | 123 | 18,9 | 69 | 10,2 |
| 21 | 184 | 24 | 103 | 12,9 |

Der in der Tabelle erwähnte Unterdruck ist die Druckdifferenz zum Umgebungsdruck. Der absolute Druck ergibt sich folglich als Differenzumgebungsdruck minus Unterdruck.

Die unterschiedlichen Spannungswerte charakterisieren eine Nennspannung (230 V), eine große Unterspannung und eine große Überspannung. Es hat sich für die Praxis gezeigt, dass für Sauggeräte 10 mit Netzbetrieb eine solche Kategorisierung ausreichend ist.

Man erkennt in den Tabellen, dass mit vorhandener Filtereinrichtung 26 der Unterdruck größer ist als ohne Filtereinrichtung 26. Dies bedeutet, dass mit Filtereinrichtung 26 der absolute Druck kleiner ist als mit fehlender Filtereinrichtung 26.

Man erkennt ferner aus diesen Tabellen die Abhängigkeit von der Spannung U und von der Leistungsaufnahme P.

Ferner erkennt man (wie erwartet), dass mit Verkleinerung des Schlauchdurchmessers der Unterdruck steigt, das heißt der absolute Druck sinkt.

Es ist vorgesehen, dass die Schwellenwerte, welche insbesondere in der Speichereinrichtung 52 tabellarisch gespeichert sind, so bestimmt werden, dass der Schlauchdurchmesser W nicht eingeht, sodass sie gewissermaßen universell für das Sauggerät 10 unabhängig von dem verwendeten Saugschlauch 22 sind.

Aus den gemessenen Ergebnissen wird dann eine entsprechende Schwellenwerttabelle erzeugt, indem Schwellenwerte verwendet werden, die für alle Schlauchdurchmesser W gelten:

**Tabelle 4:**

| U | p_{T} (Max. Leistung) | p_{T} (Min. Leistung) |
|---|---|---|
| 207 | 27 | 14 |
| 230 | 30 | 15 |
| 254 | 36 | 19 |

Der Druck p_{T} ist dabei der entsprechende Schwellenwertdruck, wobei in der gezeigten Tabelle er als Unterdruck angezeigt wird. Wie oben erwähnt, ist der entsprechende Schwellenwert, wenn er auf absolute Druckwerte bezogen wird, die Differenz zwischen dem Umgebungsdruck und p_{T}.

Die entsprechenden Schwellenwerte werden für die maximale Leistungsaufnahme und für die minimale Leistungsaufnahme tabellarisch gespeichert. Ferner werden sie für die jeweilige Spannung U der elektrischen Energiequelle 58 gespeichert, wobei hier insbesondere auch eine Kategorisierung erfolgt. (In der Regel genügt es, die Spannung U in wenige Bereiche wie beispielsweise drei Bereiche einzuteilen.)

Anhand dieser Schwellenwerttabelle wird dann durch die Auswerteeinheit 46 geprüft, ob ein Abschaltsignal für das Saugaggregat 30 erzeugt werden soll oder nicht.

In der folgenden Tabelle ist noch für unterschiedliche Schlauchdurchmesser gezeigt, wie lange es zwischen Inbetriebnahme des Saugaggregats 30 für unterschiedliche Schlauchdurchmesser W mit Filtereinrichtung 26 und ohne Filtereinrichtung 26 dauert, bis sich stabile Druckwerte an dem Drucksensor 42 einstellen:

**Tabelle 5:**

| Zeit [s] | | |
|---|---|---|
| Schlauchdurchmesser W [mm] | mit Filtereinrichtung / offen | ohne Filtereinrichtung / offen |
| 21 | 2,75 | 0,83 |
| 27 | 2,05 | 1,48 |
| 32 | 2,35 | 1,31 |
| 35 | 2,37 | 1,03 |
| 40 | 2,03 | 1,11 |
| 51 | 1,06 | 1,13 |

Aus diesen gemessenen Werten lässt sich das bestimmte Zeitintervall festlegen, welches dazu verwendet wird, um Prüfungsergebnisse freizugeben bzw. um die Prüfung durchzuführen, welche zu einer Abschaltung führen kann. Man erkennt aus der Tabelle, dass beispielsweise eine Wartezeit von ca. 3 Sekunden ausreichend ist, um bei allen Verhältnissen (mit Filtereinrichtung 26, ohne Filtereinrichtung 26, unterschiedliche Schlauchdurchmesser W) stabile Druckverhältnisse zu erreichen. Wenn hier beispielsweise noch ein Sicherheitszuschlag von 1 s oder mehr gegeben wird, dann kann beispielsweise das bestimmte Zeitintervall zu (mindestens) 4 s festgelegt werden, ab der generell ein Abschaltsignal für das Saugaggregat 30 erzeugt werden kann.

Die Tabellen 1 bis 3 und 5 sind "Kalibrierungstabellen", die dazu verwendet werden, um für den Betrieb des Sauggeräts 10 notwendige Parameter (Schwellenwerte für den Druck, bestimmtes Zeitintervall für die sinnvolle Prüfung) festzulegen. In der Speichereinrichtung 52 sind die Werte der Tabelle 4 gespeichert. Die aus den Daten der Tabelle 5 ermittelte Dauer für das bestimmte Zeitintervall ist ebenso an der Auswerteeinheit 46 (und dort beispielsweise in der Speichereinrichtung 52) gespeichert.

Durch Messung des Drucks am Drucksensor 42 oberhalb der Filtereinrichtung 26 und nachfolgend der Filtereinrichtung 26 vor der Gebläseeinrichtung 32 lässt sich auf sichere Weise erkennen, ob die Filtereinrichtung 26 eingesetzt ist oder nicht. Durch Berücksichtigung der tatsächlichen Spannung der elektrischen Energiequelle 58 und gegebenenfalls auch durch die Leistungsaufnahme des Saugaggregats 30 lässt sich diese Detektion verbessern.

Durch Abwarten eines bestimmten Zeitintervalls nach Inbetriebnahme des Saugaggregats 30 für die Verwendung von Prüfungsergebnissen lässt sich sicherstellen, dass ein "Einschwingvorgang" unmittelbare nach Inbetriebnahme des Saugaggregats 30 abgeschlossen ist.

Es hat sich gezeigt, dass sich eine sichere Prüfung ergibt, auch wenn Saugschläuche 22 unterschiedlichen Durchmessers verwendet werden. Die Prüfung bezüglich Vorhandenseins der Filtereinrichtung 26 lässt sich dadurch zubehörunabhängig durchführen.

Der konstruktive Aufwand für das Sauggerät 10 ist für diese Prüfung minimiert.

Es lässt sich dadurch verhindern, dass das Sauggerät 10 ohne Filtereinrichtung 26 über längere Zeit betrieben wird. Im Prinzip lässt sich sicherstellen, dass das Sauggerät 10 ohne Filtereinrichtung 26 höchstens für das bestimmte Zeitintervall (beispielsweise 4 s) betrieben wird.

Wenn eine Filtereinrichtung 26 erkannt wird, dann können die Detektionsergebnisse des Drucksensors 42 auch für andere Maßnahmen (in Figur 2 durch das Bezugszeichen 26 angedeutet) verwendet werden. Solche Maßnahmen sind beispielsweise ein bedarfsgerechte Filterabreinigung der Filtereinrichtung 26 durch entsprechende Ansteuerung der Abreinigungseinrichtung 40. Beispielsweise kann ein allmählicher Druckanstieg in der Absaugleitung 28 (Anstieg des absoluten Drucks, Verringerung des Unterdrucks) als allmähliches Zusetzen der Filtereinrichtung 26 interpretiert werden und bei Erreichen einer Schwelle kann dann eine Filterabreinigung durch die Abreinigungseinrichtung 40 eingeleitet werden.

Ferner kann beispielsweise ein Volumenstrom über die Druckmesswerte abgeleitet werden und es kann ein Wartungssignal erzeugt werden, wenn ein Schwellenwert für einen Volumenstrom unterschritten wird.

Erfindungsgemäß wird ein Sauggerät 10 bereitgestellt, bei dem mit geringem konstruktivem Aufwand das Vorhandensein der Filtereinrichtung 26 detektiert werden kann. Es wird sichergestellt, dass bei detektierter fehlender Filtereinrichtung 26 kein Weiterbetrieb möglich ist. Dadurch wird verhindert, dass Stäube durch das Sauggerät 10 in die Umgebung geblasen werden.

### Bezugszeichenliste

- 10: Sauggerät
- 12: Schmutzsammelbehälter
- 14: Lenkrolle
- 16: Radeinrichtung
- 18: Saugkopf
- 20: Saugeinlass
- 22: Saugschlauch
- 24: Saugauslass
- 26: Filtereinrichtung
- 27: Filterhalter
- 28: Absaugleitung
- 30: Saugaggregat
- 32: Gebläseeinrichtung
- 34: Antriebsmotor
- 36: Schmutzseite
- 38: Reinseite
- 40: Abreinigungseinrichtung
- 42: Drucksensor
- 44: Steuerung
- 46: Auswerteeinheit
- 48: (Eingabe-)Schnittstelle
- 50: Prüfungseinrichtung
- 52: Speichereinrichtung
- 54: (Ausgabe-)Schnittstelle
- 56: Schalter
- 58: Elektrische Energiequelle
- 60: Ermittlungseinrichtung für elektrische Spannung
- 62: Bestimmungseinrichtung
- 64: Zeitglied
- 66: "Maßnahmen"

## Patentansprüche

1. Verfahren zum Betreiben eines Sauggeräts (10), welches ein Saugaggregat (30) und eine entfernbare Filtereinrichtung (26) umfasst, wobei das Saugaggregat (30) einen Saugstrom erzeugt, welcher die Filtereinrichtung (26), wenn sie am Sauggerät (10) angeordnet ist, durchströmt, bei dem nach Inbetriebnahme des Saugaggregats (30) geprüft wird, ob die Filtereinrichtung (26) vorhanden ist, und wenn dann erkannt wird, dass die Filtereinrichtung (26) nicht vorhanden ist, das Saugaggregat (30) abgeschaltet wird, wobei eine Auswerteeinheit (46) Prüfungsdaten verwendet und aus diesen ermittelt, ob ein Abschaltsignal für das Saugaggregat (30) erzeugt werden soll oder nicht, **dadurch gekennzeichnet, dass** die Auswerteeinheit (46) einen Algorithmus oder eine Tabelle verwendet, um aus den Prüfungsdaten eine Entscheidung bezüglich Abschalten des Saugaggregats (30) zu treffen, und dass die Tabelle mindestens einen Schwellenwert enthält oder der Algorithmus mindestens einen Schwellenwert bestimmt, wobei der mindestens eine Schwellenwert ein Schwellenwert für eine Abschaltung des Saugaggregats (30) ist.

2. Verfahren nach Anspruch 1, **dadurch gekennzeichnet, dass** ein bestimmtes Zeitintervall nach der Inbetriebnahme des Saugaggregats (30) abgewartet wird, bevor Prüfungsergebnisse zum Abschalten oder Weiterbetrieb des Saugaggregats (30) verwendet werden, und insbesondere
**dadurch gekennzeichnet, dass** das bestimmte Zeitintervall mindestens 2,5 s, vorzugsweise mindestens 3 s, und insbesondere mindestens 3,5 s beträgt.

3. Verfahren nach einem der vorangehenden Ansprüche, **dadurch gekennzeichnet, dass** die Prüfung bezüglich Vorhandensein der Filtereinrichtung (26) an dem Saugstrom durchgeführt wird.

4. Verfahren nach einem der vorangehenden Ansprüche, **dadurch gekennzeichnet, dass** die Grundlage der Prüfung gemessene Druckwerte an dem Saugstrom zwischen der Filtereinrichtung (26) und dem Saugaggregat (30) sind, und insbesondere **gekennzeichnet durch** mindestens eines der Folgenden:
- die Druckmesswerte werden an einer oder mehreren Stellen bezogen auf den Saugstrom oberhalb eines Halters (27) für die Filtereinrichtung (26) ermittelt, wobei diese Stelle oder Stellen oberhalb der Filtereinrichtung (26) liegen, wenn die Filtereinrichtung (26) an dem Filterhalter (27) eingesetzt ist;
- die Stelle oder Stellen, an der Druckmesswerte ermittelt werden, liegen außerhalb eines Beaufschlagungsbereichs einer Abreinigungseinrichtung (40) für die Filtereinrichtung (26);
- zur Prüfung wird weiterhin eine elektrische Spannung (U) einer Energiequelle (58) für das Saugaggregat (30) verwendet.

5. Verfahren nach einem der vorangehenden Ansprüche, **dadurch gekennzeichnet, dass** die Auswerteeinheit (46) signalwirksam mit einer Steuerung (44) für das Saugaggregat (30) verbunden ist oder Teil dieser Steuerung (44) ist.

6. Verfahren nach einem der vorangehenden Ansprüche, **dadurch gekennzeichnet, dass** der mindestens eine Schwellenwert ein Druckwert ist, wobei ein Abschalten des Saugaggregats (30) bei einem zu großen absoluten Druckwert bezogen auf den Schwellenwert erfolgt, und insbesondere
**dadurch gekennzeichnet, dass** die Tabelle Schwellenwerte bei unterschiedlichen elektrischen Spannungen (U) einer Energiequelle (58) für das Saugaggregat (30) umfasst oder der Algorithmus Schwellenwerte bei solchen unterschiedlichen elektrischen Spannungen (U) bestimmt.

7. Verfahren nach Anspruch 6, **dadurch gekennzeichnet, dass** die Tabelle Schwellenwerte für unterschiedliche Leistungsaufnahmen (P) des Saugaggregats (30) umfasst oder der Algorithmus solche Schwellenwerte für unterschiedliche Leistungen (P) des Saugaggregats (30) bestimmt, und insbesondere eine Einteilung bezogen auf eine minimale Leistungsaufnahme und maximale Leistungsaufnahme des Saugaggregats (30) erfolgt.

8. Verfahren nach Anspruch 6 oder 7, **dadurch gekennzeichnet, dass** die Schwellenwerte aus Messungen ermittelt werden, bei denen Saugschläuche (22) unterschiedlichen Durchmessers (W) an das Sauggerät (10) angeschlossen werden und Druckmesswerte mit eingesetzter Filtereinrichtung (26) und ohne eingesetzte Filtereinrichtung (26) gemessen werden, und insbesondere
**dadurch gekennzeichnet, dass** bei der Ermittlung der Schwellenwerte unterschiedliche elektrische Spannungen (U) einer Energiequelle (58) für das Saugaggregat (30) verwendet werden, und insbesondere
**dadurch gekennzeichnet, dass** bei der Ermittlung der Schwellenwerte unterschiedliche Leistungsaufnahmen (P) für das Saugaggregat (30) verwendet werden und insbesondere eine minimale Leistungsaufnahme und eine maximale Leistungsaufnahme verwendet wird.

9. Verfahren nach einem der vorangehenden Ansprüche, **dadurch gekennzeichnet, dass** eine eingesetzte Filtereinrichtung (26) eine Dichtungsfunktion an einem Übergang zu einem Schmutzsammelbehälter (12) aufweist.

10. Verfahren nach einem der vorangehenden Ansprüche, **dadurch gekennzeichnet, dass** die Auswerteeinheit (46) Maßnahmen aus den ermittelten Prüfungsdaten einleitet, wenn das Vorhandensein einer Filtereinrichtung (26) erkannt wird, wobei diese Maßnahmen umfassen können:
- Initiierung einer Abreinigung der Filtereinrichtung (26) durch eine Abreinigungseinrichtung (40) und/oder
- Erzeugung eines Wartungssignals, wenn ein Schwellenwert für einen Volumenstrom unterschritten wird.

11. Sauggerät, umfassend ein Saugaggregat (30), und eine entnehmbare Filtereinrichtung (26), wobei das Saugaggregat (30) einen Saugstrom erzeugt, welcher bei an dem Sauggerät (30) angeordneter Filtereinrichtung (26) die Filtereinrichtung (26) durchströmt, eine Drucksensoreinrichtung (42), welche zwischen der Filtereinrichtung (26) und dem Saugaggregat (30) angeordnet ist und Druckmesswerte am Saugstrom der Filtereinrichtung (26) nachgeordnet und dem Saugaggregat (30) vorgeordnet bereitstellt, und eine Auswerteeinheit (46), welche nach Inbetriebnahme des Saugaggregats (30) auf Grundlage der Messdaten der Drucksensoreinrichtung (42) ermittelt, ob die Filtereinrichtung (26) eingesetzt ist oder nicht, und bei Detektion einer fehlenden Filtereinrichtung (26) ein Abschaltsignal für das Saugaggregat (30) erzeugt, **dadurch gekennzeichnet, dass** die Auswerteeinheit (46) eine Speichereinrichtung (52) umfasst, welche Schwellenwerte oder Daten für einen Algorithmus für Schwellenwerte speichert, wobei die Schwellenwerte Schwellenwerte für eine Abschaltung des Saugaggregats (30) sind.

12. Sauggerät nach Anspruch 11, **dadurch gekennzeichnet, dass** die Auswerteeinheit (46) ein Zeitglied (64) umfasst, welches dafür sorgt, dass ein Abschaltsignal erst nach Ablauf eines bestimmten Zeitintervalls nach Inbetriebnahme des Saugaggregats (30) wirksam wird.

13. Sauggerät nach Anspruch 11 oder 12, **dadurch gekennzeichnet, dass** die Schwellenwerte Druckwerte sind.

14. Sauggerät nach einem der Ansprüche 11 bis 13, **gekennzeichnet durch** mindestens eines der Folgenden:
- die Auswerteeinheit (46) umfasst eine Ermittlungseinrichtung (60) für eine elektrische Spannung (U) einer elektrischen Energiequelle (58) für das Saugaggregat (30);
- die Auswerteeinheit (46) umfasst eine Bestimmungseinrichtung (62) für eine Leistungsaufnahme des Saugaggregats (30) und teilt insbesondere die Leistungsaufnahme (P) in eine maximale Leistungsaufnahme oder minimale Leistungsaufnahme ein;
- die Auswerteeinheit (46) ist signalwirksam mit einer Steuerung (44) des Sauggeräts (10) verbunden oder ist Teil dieser Steuerung (44).

15. Verwendung des Sauggeräts gemäß einem der Ansprüche 11 bis 14 zur Durchführung des Verfahrens gemäß einem der Ansprüche 1 bis 10, oder Verwendung des Verfahrens gemäß einem der Ansprüche 1 bis 10 mit dem Sauggerät gemäß einem der Ansprüche 11 bis 14.

## Claims

1. Method for operating a suction device (10), said suction device (10) comprising a suction unit (30) and a removable filtering device (26), wherein the suction unit (30) generates a suction flow that flows through the filtering device (26) when this is arranged on the suction device (10), in which method, after the suction unit (30) is started up, a check is performed as to whether the filtering device (26) is present, and if it is detected that the filtering device (26) is not present, the suction unit (30) is switched off, wherein an evaluation unit (46) uses check data and determines therefrom whether a switch-off signal is to be generated for the suction unit (30) or not, **characterized in that** the evaluation unit (46) uses an algorithm or a table to arrive at a decision on switching off the suction unit (30) based on the check data, and **in that** the table contains at least one threshold value or the algorithm defines at least one threshold value, wherein the at least one threshold value is a threshold value for switching off the suction unit (30).

2. Method according to claim 1, **characterized in that** there is a delay of a defined time interval after the suction unit (30) is started up before check results for switching off or continuing to operate the suction unit (30) are used, and in particular
**characterized in that** the defined time interval is at least 2.5 s, preferably at least 3 s and in particular at least 3.5 s.

3. Method according to any one of the preceding claims, **characterized in that** the check for the presence of the filtering device (26) is carried out on the suction flow.

4. Method according to any one of the preceding claims, **characterized in that** pressure values measured on the suction flow between the filtering device (26) and the suction unit (30) form the basis of the check, and in particular **characterized by** at least one of the following:
- the pressure measured values are determined at one or more locations in relation to the suction flow above a holder (27) for the filtering device (26), wherein this location or these locations is/are above the filtering device (26) when the filtering device (26) is inserted in the filter holder (27);
- the location or locations at which pressure measured values are determined lie outside a region in which a cleaning-off device (40) acts on the filtering device (26);
- for the purpose of checking, furthermore an electrical voltage (U) of an energy source (56) is used for the suction unit (30).

5. Method according to any one of the preceding claims, **characterized in that** the evaluation unit (46) is connected to a controller (44) for the suction unit (30) in a manner allowing signalling, or is part of this controller (44).

6. Method according to any of the preceding claims, **characterized in that** the at least one threshold value is a pressure value, wherein switching off of the suction unit (30) is performed in the event of an absolute pressure value that is too high in relation to the threshold value, and in particular
**characterized in that** the table includes threshold values at different electrical voltages (U) of an energy source (58) for the suction unit (30), or the algorithm defines threshold values at such different electrical voltages (U).

7. Method according to claim 6, **characterized in that** the table includes threshold values for different power consumptions (P) of the suction unit (30), or the algorithm defines such threshold values for different powers (P) of the suction unit (30), and in particular performs a classification into a minimum power consumption and maximum power consumption of the suction unit (30).

8. Method according to claim 6 or 7, wherein the threshold values are determined from measurements in which suction hoses (22) of different diameters (W) are attached to the suction device (10) and pressure measured values are measured with the filtering device (26) used and without using the filtering device (26), and in particular
**characterized in that**, when the threshold values are determined, different electrical voltages (U) of an energy source (58) for the suction unit (30) are used, and in particular
**characterized in that**, when the threshold values are determined, different power consumptions (P) are used for the suction unit (30), and in particular a minimum power consumption and a maximum power consumption are used.

9. Method according to any one of the preceding claims, **characterized in that** using a filtering device (26) has the function of providing sealing at a transition to a dirt collecting container (12).

10. Method according to any one of the preceding claims, **characterized in that** the evaluation unit (46) initiates measures based on the determined check data if the presence of a filtering device (26) is detected, wherein these measures may include at least one of:
- initiation of cleaning off the filtering device (26) by a cleaning-off device (40); and/or
- generation of a maintenance signal when a flow rate falls below a threshold value.

11. Suction device, comprising a suction unit (30) and a removable filtering device (26), wherein the suction unit (30) generates a suction flow that flows through the filtering device (26) when the filtering device (26) is arranged on the suction device (30), a pressure sensor device (42) that is arranged between the filtering device (26) and the suction unit (30) and provides pressure measured values of the suction flow downstream of the filtering device (26) and upstream of the suction unit (30), and an evaluation unit (46) that, after the suction unit (30) is started up, determines on the basis of the measurement data of the pressure sensor device (42) whether the filtering device is being used or not and, if it is detected that there is no filtering device (26), generates a switch-off signal for the suction unit (30), **characterized in that** the evaluation unit (46) includes a storage device (52) that stores threshold values or data for an algorithm for threshold values, wherein the threshold values are threshold values for switching off the suction unit (30).

12. Suction device according to claim 11, **characterized in that** the evaluation unit (46) includes a timing element (64) that ensures that a switch-off signal only becomes effective once a defined time interval after starting up the suction unit (30) has elapsed.

13. Suction device according to claim 11 or 12, **characterized in that** the threshold values are pressure values.

14. Suction device according to any one of claims 11 to 13, **characterized by** at least one of the following:
- the evaluation unit (46) includes a device (60) for determining an electrical voltage (U) of an electrical energy source (58) for the suction unit (30);
- the evaluation unit (46) includes a device (62) for defining a power consumption of the suction unit (30), and in particular classifies the power consumption (P) into a maximum power consumption or a minimum power consumption;
- the evaluation unit (46) is connected to a controller (44) of the suction device (10) in a manner allowing signalling, or is part of this controller (44).

15. Use of the suction device according to any one of claims 11 to 14 for carrying out the method according to any one of claims 1 to 10, or use of the method according to any one of claims 1 to 10 using the suction device according to any one of claims 11 to 14.

## Revendications

1. Procédé de fonctionnement d'un appareil d'aspiration (10), qui comprend un groupe d'aspiration (30) et un dispositif de filtration (26) amovible, dans lequel le groupe d'aspiration (30) produit un courant d'aspiration qui traverse le dispositif de filtration (26) lorsqu'il est agencé au niveau de l'appareil d'aspiration (10), au cours duquel une vérification de la présence du dispositif de filtration (26) est mise en œuvre après la mise en service du groupe d'aspiration (30), et s'il est détecté que le dispositif de filtration (26) n'est pas présent, le groupe d'aspiration (30) est désactivé, dans lequel une unité d'évaluation (46) utilise des données de vérification et détermine à partir de celles-ci si un signal de désactivation pour le groupe d'aspiration (30) doit être généré ou non, **caractérisé en ce que** l'unité d'évaluation (46) utilise un algorithme ou un tableau afin de prendre, à partir des données de vérification, une décision concernant la désactivation du groupe d'aspiration (30), et **en ce que** le tableau contient au moins une valeur de seuil ou l'algorithme détermine au moins une valeur de seuil, dans lequel la au moins une valeur de seuil est une valeur de seuil pour une désactivation du groupe d'aspiration (30).

2. Procédé selon la revendication 1, **caractérisé en ce qu'**un intervalle de temps défini s'écoule après la mise en service du groupe d'aspiration (30) avant que des résultats de vérification ne soient utilisés pour désactiver ou laisser fonctionner le groupe d'aspiration (30), et en particulier
**caractérisé en ce que** l'intervalle de temps défini est d'au moins 2,5 s, de préférence d'au moins 3 s, et en particulier d'au moins 3,5 s.

3. Procédé selon l'une quelconque des revendications précédentes, **caractérisé en ce que** la vérification concernant la présence du dispositif de filtration (26) est mise en œuvre au niveau du courant d'aspiration.

4. Procédé selon l'une quelconque des revendications précédentes, **caractérisé en ce que** le fondement de la vérification repose sur des valeurs de pression mesurées au niveau du courant d'aspiration entre le dispositif de filtration (26) et le groupe d'aspiration (30), et en particulier **caractérisé par** au moins une des caractéristiques ci-dessous :
- les valeurs de pression sont déterminées à un ou plusieurs emplacement(s) par rapport au courant d'aspiration au-dessus d'un support (27) destiné au dispositif de filtration (26), dans lequel ledit emplacement ou lesdits emplacements est ou sont situé(s) au-dessus du dispositif de filtration (26) lorsque le dispositif de filtration (26) est installé sur le porte-filtre (27) ;
- le ou les emplacement(s) au niveau duquel ou desquels des valeurs de pression sont déterminées se situe (nt) en dehors d'une région de sollicitation d'un dispositif de nettoyage (40) destiné au dispositif de filtration (26) ;
- une tension électrique (U) d'une source d'énergie (58) destinée au groupe d'aspiration (30) est en outre utilisée pour la vérification.

5. Procédé selon l'une quelconque des revendications précédentes, **caractérisé en ce que** l'unité d'évaluation (46) est reliée de manière efficace en termes de signal à une commande (44) destinée au groupe d'aspiration (30) ou fait partie de ladite commande (44).

6. Procédé selon l'une quelconque des revendications précédentes, **caractérisé en ce que** la au moins une valeur de seuil est une valeur de pression, dans lequel une désactivation du groupe d'aspiration (30) a lieu en cas de valeur de pression absolue trop élevée par rapport à la valeur de seuil, et en particulier
**caractérisé en ce que** le tableau comprend des valeurs de seuil pour différentes tensions électriques (U) d'une source d'énergie (58) destinée au groupe d'aspiration (30) ou **en ce que** l'algorithme détermine des valeurs de seuil pour lesdites différentes tensions électriques (U).

7. Procédé selon la revendication 6, **caractérisé en ce que** le tableau comprend des valeurs de seuil pour différentes puissances absorbées (P) du groupe d'aspiration (30) ou l'algorithme détermine lesdites valeurs de seuil pour différentes puissances (P) du groupe d'aspiration (30), et en particulier une classification est effectuée en fonction d'une puissance absorbée minimale et d'une puissance absorbée maximale du groupe d'aspiration (30).

8. Procédé selon la revendication 6 ou 7, **caractérisé en ce que** les valeurs de seuil sont déterminées à partir de mesures pour lesquelles des tuyaux d'aspiration (22) de différents diamètres (W) sont raccordés à l'appareil d'aspiration (10) et des valeurs de mesure de pression sont mesurées avec le dispositif de filtrage (26) inséré et sans le dispositif de filtrage (26) inséré, et en particulier
**caractérisé en ce que** différentes tensions électriques (U) d'une source d'énergie (58) destinée au groupe d'aspiration (30) sont utilisées lors de la détermination des valeurs de seuil, et en particulier
**caractérisé en ce que** différentes puissances absorbées (P) destinées au groupe d'aspiration (30) sont utilisées lors de la détermination des valeurs de seuil, et en particulier une puissance absorbée minimale et une puissance absorbée maximale sont utilisées.

9. Procédé selon l'une quelconque des revendications précédentes, **caractérisé en ce qu'**un dispositif de filtration (26) inséré présente une fonction d'étanchéité au niveau d'une transition vers un réservoir collecteur de saletés (12).

10. Procédé selon l'une quelconque des revendications précédentes, **caractérisé en ce que** l'unité d'évaluation (46) lance des étapes à partir des données de vérification déterminées lorsque la présence d'un dispositif de filtration (26) est détectée, dans lequel lesdites étapes peuvent consister à :
- initier un nettoyage du dispositif de filtration (26) grâce à un dispositif de nettoyage (40) et/ou
- générer un signal de maintenance lorsqu'une valeur de seuil pour un débit volumétrique est dépassée.

11. Appareil d'aspiration, comprenant un groupe d'aspiration (30) et un dispositif de filtration (26) amovible, dans lequel le groupe d'aspiration (30) produit un courant d'aspiration qui traverse le dispositif de filtration (26) lorsque le dispositif de filtration (26) est agencé au niveau de l'appareil d'aspiration (30), un dispositif de détection de pression (42) qui est agencé entre le dispositif de filtration (26) et le groupe d'aspiration (30) et qui fournit des valeurs de mesure de pression au niveau du courant d'aspiration en aval du dispositif de filtration (26) et en amont du groupe d'aspiration (30), et une unité d'évaluation (46) qui, après la mise en service du groupe d'aspiration (30) et en se basant sur les données de mesure du dispositif de détection de pression (42), détermine si le dispositif de filtration (26) est utilisé ou non, et qui, en cas de détection d'un dispositif de filtration (26) défectueux, génère un signal de désactivation pour le groupe d'aspiration (30), **caractérisé en ce que** l'unité d'évaluation (46) comprend un dispositif de stockage (52) qui mémorise des valeurs de seuil ou des données pour un algorithme destiné à des valeurs de seuil, dans lequel les valeurs de seuil sont des valeurs de seuil pour une désactivation du groupe d'aspiration (30).

12. Appareil d'aspiration selon la revendication 11, **caractérisé en ce que** l'unité d'évaluation (46) comprend un organe formant horloge (64) qui assure qu'un signal de désactivation ne devient actif qu'après l'écoulement d'un certain intervalle de temps après la mise en service du groupe d'aspiration (30).

13. Appareil d'aspiration selon la revendication 11 ou 12, **caractérisé en ce que** les valeurs de seuil sont des valeurs de pression.

14. Appareil d'aspiration selon l'une quelconque des revendications 11 à 13, **caractérisé par** au moins une des caractéristiques ci-dessous :
- l'unité d'évaluation (46) comprend un dispositif de détermination (60) d'une tension électrique (U) d'une source d'énergie électrique (58) destinée au groupe d'aspiration (30) ;
- l'unité d'évaluation (46) comprend un dispositif de détermination (62) d'une puissance absorbée du groupe d'aspiration (30) et classe en particulier la puissance absorbée (P) en puissance absorbée maximale ou en puissance absorbée minimale ;
- l'unité d'évaluation (46) est connectée de manière efficace en termes de signal à une commande (44) de l'appareil d'aspiration (10) ou fait partie de ladite commande (44).

15. Utilisation de l'appareil d'aspiration selon l'une quelconque des revendications 11 à 14 en vue de la mise en œuvre du procédé selon l'une quelconque des revendications 1 à 10, ou utilisation du procédé selon l'une quelconque des revendications 1 à 10 avec l'appareil d'aspiration selon l'une quelconque des revendications 11 à 14.
